# EUROPEAN PATENT APPLICATION

(11) **EP 3 599 576 A1**
(43) Date of publication of application: **29.01.2020**
(21) Application number: 19188048.3
(22) Date of filing: 24.07.2019
(51) Int. Cl.: G06Q 10/00, G06Q 50/10

(54) **INFORMATION PROCESSING APPARATUS, ORDER TERMINAL APPARATUS, AND INFORMATION PROCESSING PROGRAM**

(30) Priority: 25.07.2018 JP 2018139762
(71) Applicant: Toshiba Tec Kabushiki Kaisha, 141-8562 Tokyo (JP)
(72) Inventor: YAMAMOTO, Takashi, Shinagawa-ku, Tokyo 141-8562 (JP)
(74) Representative: Bandpay & Greuter

(57) **Abstract**

An information processing apparatus according to an embodiment is accessible to a storing section that stores, concerning each of a plurality of articles, setting data respectively set in advance concerning a plurality of items. The information processing apparatus includes an determining section, a selecting section, and a notifying section. The determining section determines a designated article designated as a candidate of an order by operation by an operator. The selecting section selects, if an order of the determined designated article cannot be received, as recommended articles, other articles, setting data of which coinciding with the setting data stored in the storing section concerning the designated article is stored in the storing section concerning same items, in descending order of priority degrees of items for which the coinciding setting data are set. The notifying section notifies the selected recommended articles to the operator.

## Description

### FIELD

Embodiments described herein relate generally to an information processing apparatus, an order terminal apparatus, and an information processing program.

### BACKGROUND

It is known that, in an order system or the like that receives an order in a restaurant or the like, if a designated article cannot be ordered because of a stockout or the like, display for recommending another article associated with the article in advance is performed.

However, if articles to be alternatively recommended are associated with respective articles, maintenance of the association is necessary if a menu is changed.

Because of such circumstances, it has been desired that it is possible to reduce labor and time of maintenance involved in a menu change while recommending alternative articles.

### SUMMARY OF INVENTION

To solve such problem, there is provided an information processing apparatus configured to access a storing section that stores, concerning each of a plurality of articles, setting data respectively set in advance concerning a plurality of items, the information processing apparatus comprising: a determining section configured to determine a designated article designated as a candidate of an order by operation of an operator; a selecting section configured to select, if an order of the designated article determined by the determining section cannot be fulfilled, recommended articles, setting data of which stored in the storing section and associated with the designated article is stored in the storing section, in descending order of priority degrees of items for which the associated setting data are set; and a notifying section configured to notify the recommended articles selected by the selecting section to the operator.

Preferably, if a plurality of the recommended articles, are present, the selecting section selects the recommended articles in descending order of priority degrees of the items, the setting data of which items having lower priority degrees than the items associated with the designated article.

Preferably still, if a number of the recommended articles, is larger than a predetermined maximum number, the selecting section selects the predetermined maximum number of the recommended articles based on priority degrees.

Preferably yet, the setting data comprises a stock number of designated articles, and the order of the designated article determined by the determining section cannot be fulfilled when the stock number is zero.

Suitably, the priority degrees of items comprises historical data of previous orders by the operator.

Suitably still, the priority degrees of items comprises a stock number of designated articles.

The invention also relates to an order terminal apparatus configured to access a storing section that stores, concerning each of a plurality of articles, setting data respectively set in advance concerning a plurality of items, the order terminal apparatus comprising: a determining section configured to determine a designated article designated as a candidate of an order by operation of an operator; a selecting section configured to select, if an order of the designated article determined by the determining section cannot be fulfilled, recommended articles, setting data of which stored in the storing section and associated with the designated article is stored in the storing section , in descending order of priority degrees of items for which the associated setting data are set; a notifying section configured to notify the recommended articles selected by the selecting section to the operator; and a requesting section configured to request an order management apparatus, which manages an order, to receive an order of the designated article determined by the determining section, the designated article being an article, an order of which can be fulfilled.

Preferably, if a plurality of the recommended articles, are present, the selecting section selects the recommended articles in descending order of priority degrees of the items, the setting data of which items having lower priority degrees than the items associated with the designated article.

Preferably still, if a number of the recommended articles, is larger than a predetermined maximum number, the selecting section selects the predetermined maximum number of the recommended articles based on priority degrees.

Preferably yet, the setting data comprises a stock number of designated articles, and the order of the designated article determined by the determining section cannot be fulfilled when the stock number is zero.

Suitably, the priority degrees of items comprises historical data of previous orders by the operator.

Suitably still, the priority degrees of items comprises a stock number of designated articles.

The invention also concerns an information processing method for an information processing apparatus configured to access a storing section that stores, concerning each of a plurality of articles, setting data respectively set in advance concerning a plurality of items, the information processing method comprising: determining a designated article designated as a candidate of an order by operation of an operator; selecting, if an order of the determined designated article cannot be fulfilled, recommended articles, setting data of which stored in the storing section associated with the designated article is stored in the storing section , in descending order of priority degrees of items for which the associated setting data are set; and notifying the selected recommended articles to the operator.

Preferably, the method further comprises: requesting an order management apparatus, which manages an order, to receive an order of the designated article determined, the designated article being an article, an order of which can be fulfilled.

Preferably, if a plurality of the recommended articles, are present, selecting the recommended articles in descending order of priority degrees of the items, the setting data of which items having lower priority degrees than the items associated with the designated article.

Preferably still, if a number of the recommended articles, is larger than a predetermined maximum number, selecting the predetermined maximum number of the recommended articles based on priority degrees.

Preferably yet, the setting data comprises a stock number of designated articles, and the order of the designated article determined cannot be fulfilled when the stock number is zero.

Suitably, the priority degrees of items comprises historical data of previous orders by the operator.

Suitably still, the priority degrees of items comprises a stock number of designated articles.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a schematic configuration of a POS system and a main part circuit configuration of a handy terminal according to an embodiment;
FIG. 2 is a diagram illustrating the structure of a data record included in an attribute database;
FIG. 3 is a diagram illustrating the structure of a data record included in a management database;
FIG. 4 is a flowchart of information processing by a processor illustrated in FIG. 1;
FIG. 5 is a flowchart of the information processing; and
FIG. 6 is a flowchart of the information processing.

### DETAILED DESCRIPTION

An object of embodiments is to provide an information processing apparatus, an order terminal apparatus, and an information processing program that can reduce labor and time of maintenance involved in a menu change while recommending alternative articles.

An information processing apparatus according to an embodiment is accessible to a storing section that stores, concerning each of a plurality of articles, setting data respectively set in advance concerning a plurality of items. The information processing apparatus includes a determining section, a selecting section, and a notifying section. The determining section determines a designated article designated as a candidate of an order by operation by an operator. The selecting section selects, if an order of the designated article determined by the determining section cannot be received, as recommended articles, other articles, setting data of which coinciding with the setting data stored in the storing section concerning the designated article is stored in the storing section concerning same items, in descending order of priority degrees of items for which the coinciding setting data are set. The notifying section notifies the recommended articles selected by the selecting section to the operator.

An example of an embodiment is explained below with reference to the drawings. In this embodiment, a POS (point-of-sale) system including a handy terminal functioning as an information processing apparatus is explained as an example.

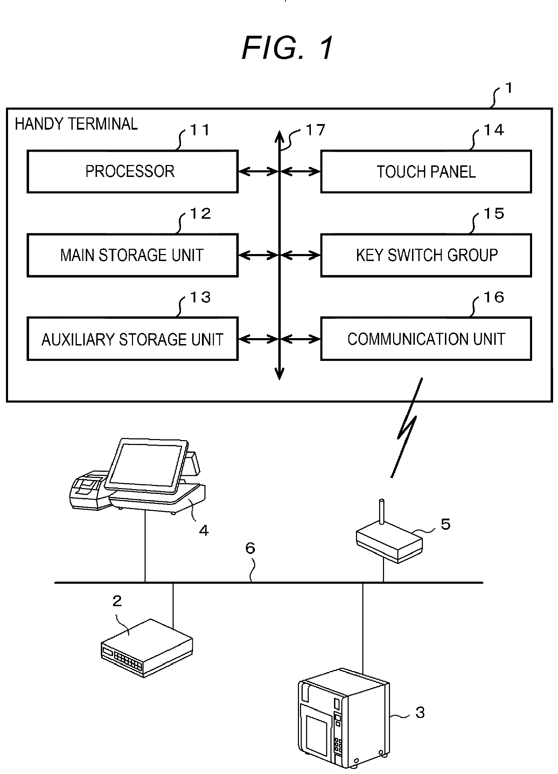

FIG. 1 is a diagram illustrating a schematic configuration of a POS system 100 and a main part circuit configuration of a handy terminal 1 according to this embodiment.

The POS system 100 is usable in various facilities such as a restaurant that performs a service for providing commodities such as foods and drinks according to orders of customers.
The POS system 100 includes a handy terminal 1, an order management apparatus 2, a slip printer 3, a POS terminal 4, a wireless router 5, and a communication network 6. One handy terminal 1, one slip printer 3, one POS terminal 4, and one wireless router 5 are illustrated in FIG. 1. However, the numbers of handy terminals 1, slip printers 3, POS terminals 4, and wireless routers 5 may be respectively any numbers. In most cases, a plurality of handy terminals 1 are included in the POS system 100.

The POS system 100 is configured by enabling the handy terminal 1, the order management apparatus 2, the slip printer 3, and the POS terminal 4 to communicate with one another via the communication network 6. The handy terminal 1 is connected to the communication network 6 via the wireless router 5 by wireless communication with the wireless router 5. However, the handy terminal 1 may be directly connected to the communication network 6. Alternatively, the order management apparatus 2, the slip printer 3, and the POS terminal 4 may be connected to the communication network 6 via the wireless router 5 by the wireless communication with the wireless router 5.
The handy terminal 1 is a form of an order terminal that receives operation for an order. The handy terminal 1 is carried and operated by a store clerk.

The order management apparatus 2 manages an order received by the handy terminal 1.
The slip printer 3 is set in, for example, a customer service floor or a kitchen. The slip printer 3 set in the customer service floor prints an order slip for a customer. That is, the slip printer 3 set in the customer service floor is a so-called customer printer. The slip printer 3 set in the kitchen prints a cooking slip for a cook. That is, the slip printer 3 set in the kitchen is a so-called kitchen printer.
The POS terminal 4 is set in, for example, the customer service floor or a checkout counter. The POS terminal 4 performs information processing concerning various jobs such as guidance to the customer, order reception, serving, tray service, and accounting. In the POS terminal 4 set in the customer service floor, the information processing concerning the guidance, the order reception, the serving, and the tray service is mainly executed. In the POS terminal 4 set in the checkout counter, the information processing concerning the accounting is further executed. The POS terminal 4 may be specialized for a specific use by performing processing concerning only a part of the jobs.
The wireless router 5 enables an apparatus including a wireless communication function such as the handy terminal 1 to communicate via the communication network 6 while performing wireless communication with the apparatus. The wireless router 5 enables communication between the handy terminal 1 and another communication terminal by connecting a wireless line to the handy terminal 1 and a wireless line to the other communication terminal each other.
The communication network 6 transmits data exchanged by apparatuses including a communication function such as the handy terminal 1, the order management apparatus 2, the slip printer 3, and the POS terminal 4. As the communication network 6, a LAN (local area network) is typically used. However, as the communication network 6, the Internet, a VPN (virtual private network), a public communication network, a mobile communication network, and the like can be used alone or can be used in combination as appropriate besides the LAN.
The handy terminal 1 includes a processor 11, a main storage unit 12, an auxiliary storage unit 13, a touch panel 14, a key switch group 15, a communication unit 16, and a transmission line 17.
The processor 11, the main storage unit 12, and the auxiliary storage unit 13 are connected by the transmission line 17 to configure a computer that executes information processing for realizing functions of the handy terminal 1.

The processor 11 is a central part of the computer. The processor 11 executes information processing based on information processing programs such as an operating system, middleware, and application programs stored in the main storage unit 12 or the auxiliary storage unit 13.
The main storage unit 12 is equivalent to a main storage portion of the computer. The main storage unit 12 includes a nonvolatile memory region and a volatile memory region. The main storage unit 12 stores the information processing programs in the nonvolatile memory region. The main storage unit 12 sometimes stores, in the nonvolatile or volatile memory region, data necessary for the processor 11 to execute processing for controlling the sections. The main storage unit 12 uses the volatile memory region as a work area in which data is rewritten as appropriate by the processor 11.
The auxiliary storage unit 13 is equivalent to an auxiliary storage portion of the computer. The auxiliary storage unit 13 is, for example, an EEPROM (electric erasable programmable read-only memory), a HDD (hard disc drive), or an SSD (solid state drive). The auxiliary storage unit 13 saves data used by the processor 11 in performing various kinds of processing or data generated by the processing in the processor 11. The auxiliary storage unit 13 sometimes stores the information processing programs.
The touch panel 14 functions as an input device and a display device.

The key switch group 15 includes a plurality of key switches to which order target articles or various functions are allocated.
The communication unit 16 performs wireless communication with the wireless router 5 and performs communication processing for the processor 11 to exchange various data with the order management apparatus 2 and the like.

The transmission line 17 includes an address bus, a data bus, and a control signal line and transmits data and control signals exchanged among the sections connected by the transmission line 17.
As basic hardware of the handy terminal 1, basic hardware of an existing handy terminal of the same type can be used. In general, transfer of the handy terminal 1 is performed in a state in which an information processing program describing information processing explained below is stored in the main storage unit 12 or the auxiliary storage unit 13. However, hardware in a state in which the information processing program is not stored in the main storage unit 12 or the auxiliary storage unit 13 or a state in which an information processing program of another version of the same type is stored in the main storage unit 12 or the auxiliary storage unit 13 and the information processing program describing the information processing explained below may be separately transferred. The handy terminal 1 may be configured by writing the information processing program describing the information processing explained below in the main storage unit 12 or the auxiliary storage unit 13 according to operation by any operator. The transfer of the information processing program can be performed by recording the information processing program in a removable recording medium such as a magnetic disk, a magneto-optical disk, an optical disk, or a semiconductor memory or can be performed by communication via a network.
The operation of the POS system 100 configured as explained above is explained. Contents of various kinds of processing explained below are examples. It is possible to, for example, change the order of a part of the processing, omit a part of the processing, or add other processing as appropriate.
Sales management performed using the POS system 100 is performed in the same manner as sales management performed by an existing self-order system. As an example, a flow of the sales management is as explained below. The store clerk operates the handy terminal 1 to order commodities ordered by the customer. The handy terminal 1 transmits order data representing order content to the order management apparatus 2. The order management apparatus 2 creates, based on the order data received from the handy terminal 1, an order list representing the order content and manages the order list. If order data concerning an additional order is sent from the handy terminal 1, the order management apparatus 2 updates the order list. Every time the order management apparatus 2 receives order data, the order management apparatus 2 instructs the same or different slip printer 3 to print a cooking slip and an order slip corresponding to the order data. The slip printer 3 prints the cooking slip and the order slip according to the instruction. A cook cooks the commodities according to the cooking slip. A store clerk in charge of customer service passes the order slip to the customer. The store clerk in charge of customer service serves the cooked commodities to a customer table. The customer finishing eating and drinking of the commodities presents the order slip to the store clerk and requests accounting. The POS terminal 4 acquires, according to operation by the store clerk, from the order management apparatus 2, the order list concerning the customer who requests the accounting. The POS terminal 4 calculates, based on the acquired order list, a price concerning the provided commodities and settles the price. In the handy terminal 1, for the operation explained above, the processor 11 executes information processing explained below. In the main storage unit 12 or the auxiliary storage unit 13, an attribute database and a management database are stored in advance for information processing explained below of the processor 11.
The attribute database represents, concerning a plurality of items, attributes about each of articles of commodities set as targets of order reception in the handy terminal 1. The management database is a set of data for managing each of the plurality of items for which the attributes are set in the attribute database.

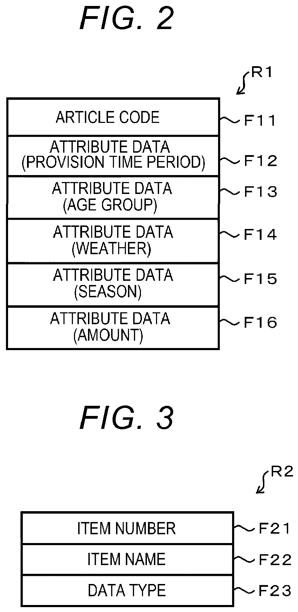

FIG. 2 is a diagram illustrating the structure of a data record included in the attribute database.

The attribute database is a set of a plurality of data records R1 associated with each of articles set as targets of order reception. The data record R1 includes fields F11, F12, F13, F14, F15, and F16.
In the field F11, data representing an article code for identifying an article associated with the commodity code is set. Predetermined five items are respectively allocated to the fields F12 to F16. Concerning associated articles, attribute data of the allocated items are respectively set in the fields F12 to F16. In this embodiment, as an example, it is assumed that a provision time period, an age group, weather, a season, and an amount are respectively allocated to the fields F12 to F16 as items. However, it may be optionally decided what kinds of items are respectively allocated to the fields F12 to F16. For example, the items may be decided as appropriate by, for example, a designer, an administrator, or the like of the handy terminal 1. It may also be optionally decided what kinds of data are set as the attribute data. The data may be decided as appropriate by the designer, the administrator, or the like. The data record R1 may include, instead of or in addition to the fields F12 to F16, fields to which other items are allocated. The number of fields included in the data record R1 in order to set attribute data may be four or less. A plurality of fields included in the data record R1 in order to set attribute data are identified by item numbers in ascending order according to order in the data record R1 of the plurality of fields. That is, in an example illustrated in FIG. 2, 1 to 5 are respectively allocated to, as item numbers, the items respectively allocated to the fields F12 to F16.
If an article associated with the attribute data set in the field F12 is provided in a limited time period, the attribute data represents the time period when the article is provided. As the attribute data, for example, "morning", "lunch", "dinner", or the like is set. As the attribute data, data of another form such as "14:00 to 17:00" may be set.
The attribute data set in the field F13 represents an age group of main target customers of an article associated with the attribute data. As the attribute data, for example, "thirties", "forties", "fifties", or the like is set. As the attribute data, data of another form such as "31 to 35" or "36 to 40" or "adult" or "child" maybe set.
The attribute data set in the field F14 represents a weather in which an article associated with the attribute data is more likely to be ordered. As the attribute data, for example, "fine", "cloudy", "rain", or the like is set. As the attribute data, data of another form such "hot", "cold", or "highly humid" may be set.
The attribute data set in the field F15 represents a season in which an article associated with the attribute data is more likely to be ordered. As the attribute data, for example, "spring", "summer", "autumn", "winter", or the like is set. As the attribute data, data of another form such as "March to June", "July to October", or "November to February" may be set.
The attribute data set in the field F16 represents an amount of an article associated with the attribute data. As the attribute data, for example, "1,000 yen", "950 yen", "870 yen", or the like is set. As the attribute data, data of another form such as "900 yen level" or "900 yen to 999 yen" may be set.
As explained above, the attribute data are, concerning each of a plurality of articles, examples of the setting data respectively set in advance concerning the plurality of items. Therefore, the main storage unit 12 or the auxiliary storage unit 13 that stores the attribute database is an example of a storing section that stores the setting data.
FIG. 3 is a diagram illustrating the structure of a data record included in the management database.

The management database is a set of a plurality of data records R2 associated with respective items of the attribute data set in the attribute database. In this embodiment, the management database is a set of five data records R2 respectively associated with the five items explained above. The data record R2 includes fields F21, F22, and F23.
In the field F21, data representing an item number for identifying an item associated with the item number is set.

In the field F22, data representing an item name given to an item associated with the item name is set. As the data, for example, "provision time period", "age group", "weather", "season", and "amount" are set.
In the field F23, data representing a data type of attribute data of an item associated with the attribute data is set. In this embodiment, if the attribute data of the associated item is "age group" or "amount", "numerical value" is set in the field F23. In this embodiment, if the attribute data of the associated item is "provision time period", "weather", or "season", "text" is set in the field F23.

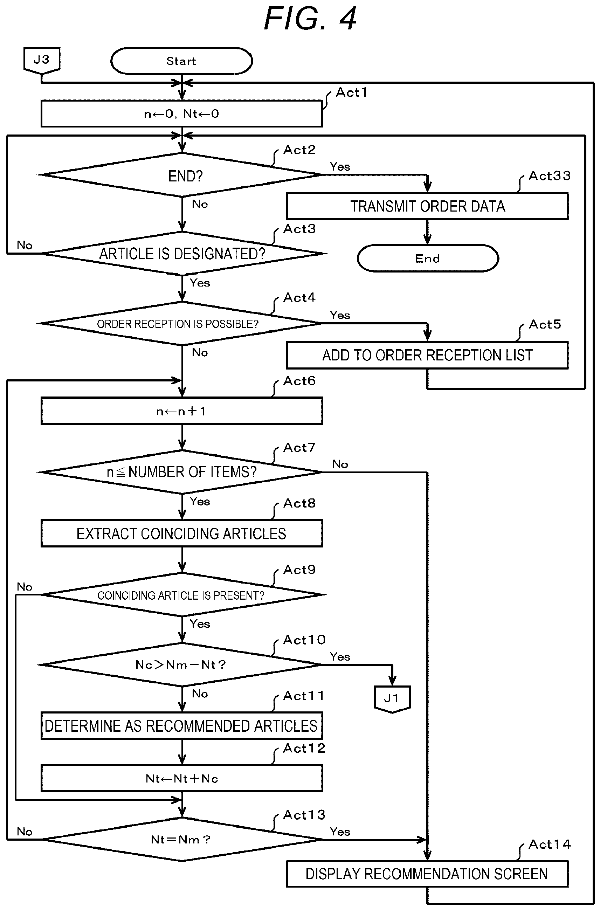

FIGS. 4, 5, and 6 are flowcharts of information processing by the processor 11. If predetermined operation for designating an order reception start is performed by the touch panel 14 or the key switch group 15, the processor 11 executes the information processing according to the information processing program stored in the main storage unit 12 or the auxiliary storage unit 13.
In Act 1, the processor 11 clears an item number n and a total number Nt respectively to 0. The item number n is a number for managing an item number of an item that is focused in order to extract a recommended article explained below. The total number Nt represents a total number of articles determined as articles recommended as alternatives of a designated article (hereinafter referred to as recommended articles as well). Therefore, the item number n and the total number Nt are referred to as item number n and total number Nt below.
In Act 2, the processor 11 confirms whether designation of an article is ended. If the designation of an article does not end, the processor 11 determines No and proceeds to Act 3.

In Act 3, the processor 11 confirms whether an article to be ordered is designated. If an article to be ordered is not designated, the processor 11 determines No and returns to Act 2.

In this way, in Act 2 and Act 3, the processor 11 waits for article designation or an end of the article designation.
The store clerk takes an order of an article that the customer is about to order and performs operation for designating the article using the touch panel 14 or the key switch group 15. The processor 11 determines Yes in Act 3 according to the operation and proceeds to Act 4. At this time, the processor 11 determines the article designated by the operation (hereinafter referred to as designated article). The processor 11 executes the information processing based on the information processing program in this way. Consequently, the computer including the processor 11 as the central part functions as a determining section that determines the designated article.
In Act 4, the processor 11 confirms whether order reception of the designated article is possible. For example, if the designated article is not included in a stockout list stored in the main storage unit 12 or the auxiliary storage unit 13, the processor 11 determines that the order reception is possible. In this case, for example, the processor 11 starts another kind of information processing with respect to interruption responding to reception of a stockout notification from the order management apparatus 2 by the communication unit 16 and adds the article described in the stockout notification to the stockout list. If there is an article, an order of which cannot be received because of some reason, the order management apparatus 2 transmits a stockout notification about the article to all the handy terminals 1. The processor 11 may inquire the order management apparatus 2 whether order reception is possible and perform the determination in Act 4 based on a reply from the order management apparatus 2.
If the order reception of the designated article is possible, the processor 11 determines Yes in Act 4 and proceeds to Act 5.

In Act 5, the processor 11 adds the designated article to an order reception list. The order reception list is data indicating a list of article codes about articles for which reception of an order in the handy terminal 1 is completed. The order reception list is stored in the main storage unit 12 or the auxiliary storage unit 13. If an article is designated for the first time, the processor 11 creates anew an order reception list including only an article code of the article and writes the order reception list in the main storage unit 12 or the auxiliary storage unit 13. Thereafter, the processor 11 returns to a waiting state in Act 2 and Act 3. Therefore, if designation of articles, order reception of which is possible, is repeated, the processor 11 repeatedly executes Act 5. If a new article is designated in a state in which the order reception list is already written in the main storage unit 12 or the auxiliary storage unit 13, in Act 5, the processor 11 updates the order reception list to add an article code of the article.
If the order reception of the designated article is not possible, the processor 11 determines No in Act 4 and proceeds to Act 6.

In Act 6, the processor 11 increases the item number n by 1.

In Act 7, the processor 11 confirms whether the item number n is equal to or smaller than the number of items of the attribute data in the attribute database. The number of items is five in the example illustrated in FIG. 2. If the item number n is equal to or smaller than the number of items, the processor 11 determines Yes and proceeds to Act 8. That is, if attribute data of an item having the item number n is present in the attribute database, the processor 11 proceeds to Act 8.
In Act 8, the processor 11 extracts all of other articles, attribute data of which about the item having the item number n coincides with the designated article (hereinafter referred to as coinciding articles). For example, the processor 11 selects, from the attribute database, the data record R1 in which the article code of the designated article is set in the field F11. If the item number n is 1, the processor 11 reads out attribute data set in the field F12 of the selected data record R1. Subsequently, the processor 11 selects, from the attribute database, all of other data records R1 in which attribute data coinciding with the read-out attribute data are set in the fields F12. The processor 11 sets, as coinciding articles, articles identified by article codes set in the fields F11 of the selected data records R1. As a specific example, it is assumed that ten articles of an article A to an article J are present. It is assumed that, as a provision time period, which is an attribute of an item having an item number 1, "lunch" is set for the article A, the article B, and the article C and attribute data other than "lunch" is set for the article D to the article J. If the designated article is the article A and the item number n is 1, the processor 11 extracts the article B and the article C as the coinciding articles.
In Act 9, the processor 11 confirms whether at least one coinciding article is present. If at least one article can be extracted in Act 8, the processor 11 determines Yes and proceeds to Act 10.

In Act 10, the processor 11 confirms whether a value of a variable Nc is larger than a value obtained by subtracting a total number Nt from a constant Nm. The processor 11 sets a value of the variable Nc to a number of the coinciding articles extracted in Act 8 this time. A value of the constant Nm is a maximum number of predetermined recommended articles. Therefore, in the following explanation, the variable Nc and the constant Nm are referred to as extraction number Nc and maximum number Nm. A value of the maximum number Nm may be any number and may be decided in advance by, for example, the designer or the administrator of the handy terminal 1. In a specific example explained below, the maximum number Nm is set to 5. A value of the total number Nt is 0 if the processor 11 executes Act 10 for the first time. Therefore, if the processor 11 executes Act 10 for the first time, the processor 11 confirms whether the extraction number Nc exceeds the maximum number Nm. If the processor 11 executes Act 10 in second and subsequent times as explained below, the processor 11 confirms whether the extraction number Nc exceeds a difference between the maximum number Nm and the total number Nt. The difference between the maximum number Nm and the total number Nt is equivalent to a number of articles that can be added as recommended articles (hereinafter referred to as addable number). That is, the processor 11 confirms whether the extraction number Nc of the coinciding articles in this time exceeds the addable number. If the extraction number Nc does not exceed the addable number, the processor 11 determines No and proceeds to Act 11.
In Act 11, the processor 11 determines all of the coinciding articles extracted this time as recommended articles.

In Act 12, the processor 11 updates the value of the total number Nt to a value obtained by adding the extraction number Nc to the value of the total number Nt up to that point.

If finishing updating the value of the total number Nt in Act 12, the processor 11 proceeds to Act 13. If no coinciding article can be extracted in Act 8, the processor 11 determines No in Act 9, and proceeds to Act 13 skipping Act 10 to Act 12.
In Act 13, the processor 11 confirms whether the total number Nt coincides with the maximum number Nm. If the total number Nt does not reach the maximum number Nm, the processor 11 determines No and repeats Act 6 and subsequent acts. By repeating the acts, the processor 11 attempts, targeting second and subsequent items, extraction of other articles, attribute data of which of the items coincide with the designated article.
For example, it is assumed that, as an age group, which is an attribute of an item having an item number 2, "thirties" is set for the article A, the article D, and the article E and attribute data other than "thirties" is set for the article F to the article J. If the item number n is 2, the processor 11 extracts the article D and the article E as coinciding articles. Consequently, the extraction number Nc is 2. If the article B and the article C are already determined as the recommended articles as explained above, the addable number is 5-2=3. Therefore, the extraction number Nc does not exceed the addable number yet. Therefore, the processor 11 repeats Act 6 and subsequent acts again.
If the total number Nt coincides with the maximum number Nm, the processor 11 determines Yes in Act 13 and proceeds to Act 14. If the item number n becomes larger than the number of items included in the attribute database before the total number Nt reaches the maximum number Nm, the processor 11 determines No in Act 7 and proceeds to Act 14. That is, if the maximum number Nm of recommended articles are successfully determined or the maximum number Nm of recommended articles are not successfully determined even if extraction of coinciding articles is attempted targeting all the item included in the attribute database, the processor 11 proceeds to Act 14.

In Act 14, the processor 11 causes the touch panel 14 to display a recommendation screen. The recommendation screen is a screen on which a list of recommended articles are displayed.
It is assumed that, for example, as weather, which is an attribute of an item having an item number 3, "fine" is set for the article A and the article F and attribute data other than "fine" is set for the article F to the article J. If the item number n is 3, the processor 11 extracts the article F as a coinciding article. Consequently, the extraction number Nc is 1. If the article B to the article E are already determined as the recommended articles as explained above, the addable number is 5-4=1. Therefore, the extraction number Nc does not exceed the addable number yet. If the coinciding article is determined as a recommended article, the total number Nt is 5 and coincides with the maximum number Nm. Therefore, the processor 11 proceeds from Act 13 to Act 14. In this case, the processor 11 causes the touch panel 14 to display a recommendation screen on which the article B to the article F are displayed as recommended articles.
It is assumed that, concerning the article A, "lunch", "thirties", "fine", "autumn", and "900 yen" are respectively set as the provision time period, the age group, the weather, the season, and the amount. On the other hand, it is assumed that "lunch" is set concerning the article B as the provision time period and "thirties" is set concerning the article C as the age group. Further, it is assumed that attributes of the other items concerning the article B and the article C and attributes of all the items concerning the article D to the article J are different from "lunch", "thirties", "fine", "autumn", and "900 yen". In this case, the processor 11 determines only the article B and the article C as recommended articles. In this case, the processor 11 proceeds from Act 7 to Act 14. The processor 11 causes the touch panel 14 to display a recommendation screen on which only the article B and the article C are displayed as the recommended articles.

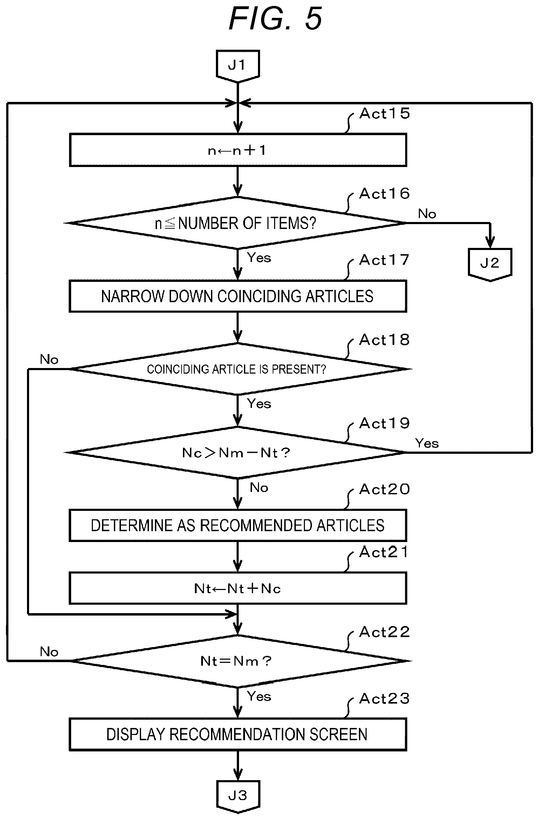

After causing the touch panel 14 to display the recommendation screen, the processor 11 returns to Act 1.
For example, it is assumed that, as the weather, which is the attribute of the item having the item number 3, "fine" is set for the article A, the article F, the article G, and the article H and attribute data other than "fine" a set for the article I and the article J. If the item number n is 3, the processor 11 extracts the article F, the article G, and the article H as coinciding articles. That is, the extraction number Nc is 3. If the article B to the article E are determined as the recommended articles as explained above, the addable number is 5-4=1. Therefore, the extraction number Nc exceeds the addable number. Therefore, while processing a loop of Act 6 to Act 13, if the extraction number Nc becomes larger than a value obtained by subtracting the total number Nt from the maximum number Nm, the processor 11 determines Yes in Act 10. In this case, the processor 11 proceeds to Act 15 in FIG. 5. That is, if all of the articles extracted this time are determined as the recommended articles and the number of recommended articles exceeds the maximum number Nm, the processor 11 proceeds to Act 15 in FIG. 5.
In Act 15, the processor 11 increases the item number n by one.

In Act 16, the processor 11 confirms whether the item number n is equal to or smaller than the number of items of the attribute data in the attribute database. If the item number n is equal to or smaller than the number of items, the processor 11 determines Yes and proceeds to Act 17. That is, if attribute data of an item having the item number n is present in the attribute database, the processor 11 proceeds to Act 17. In Act 17, the processor 11 narrows down coinciding articles extracted concerning an item having an item number n-1 to coinciding articles, attribute data of which concerning the item having the item number n coincides with the designated article. In the specific example explained above, the coinciding articles extracted concerning the item having the item number n-1 are the article F, the article G, and the article H. In this example, if "autumn" is set for the article A and the article H and attribute data other than "autumn" is set for the article F and the article H as a season, which is an attribute of an item having an item number 4, the processor 11 narrows down the coinciding articles to the article G. If "autumn" is set for the article A, the article G, and the article H and attribute data other than "autumn" is set for the article F as the season, which is the attribute of the item having the item number 4, the processor 11 narrows down the coinciding articles to the article G and the article H.
In Act 18, the processor 11 confirms whether at least one coinciding article is present. If at least one article is left by the narrow-down in Act 17, the processor 11 determines Yes and proceeds to Act 19.

In Act 19, the processor 11 confirms whether the extraction number Nc is larger than the value obtained by subtracting the total number Nt from the maximum number Nm. The extraction number Nc is the number of coinciding article left by the narrow-down in Act 17. If the extraction number Nc does not exceed the addable number, the processor 11 determines No and proceeds to Act 20.
In Act 20, the processor 11 determines all of the coinciding articles narrowed down this time as recommended articles. In the specific example explained above, if the coinciding articles are narrowed down to the article G, the extraction umber Nc is 1. On the other hand, the value obtained by subtracting the total number Nt from the maximum number Nm is 5-4=1. Therefore, the processor 11 determines No in Act 19 and determines the article G as a recommended article.
In the specific example explained above, if the coinciding articles are narrowed down to the article G and the article H, the extraction number Nc is 2. On the other hand, the value obtained by subtracting the total number Nt from the maximum number Nm is 5-4=1. Therefore, the processor 11 determines Yes I Act 19. In this case, the processor 11 repeats Act 15 and subsequent acts. That is, the processor 11 attempts to further narrow down the coinciding articles based on attribute data of an item of lower order.
In Act 21, the processor 11 updates the value of the total number Nt to a value obtained by adding the extraction number Nc to the value of the total number Nt up to that point.

If finishing updating the value of the total number Nt in Act 21, the processor 11 proceeds to Act 22. If no coinciding article is left by the narrow-down in Act 17, the processor 11 determines No in Act 18 and proceeds to Act 22 skipping Act 19 to Act 21.
In Act 22, the processor 11 confirms whether the total number Nt coincides with the maximum number Nm. If the total number Nt does not reach the maximum number Nm, the processor 11 determines No and repeats Act 15 and subsequent acts. By repeating the acts, the processor 11 attempts to further narrow down the coinciding articles based on attribute data of an item of lower order and determines recommended articles.

If the total number Nt coincides with the maximum number Nm, the processor 11 determines Yes in Act 22 and proceeds to Act 23.

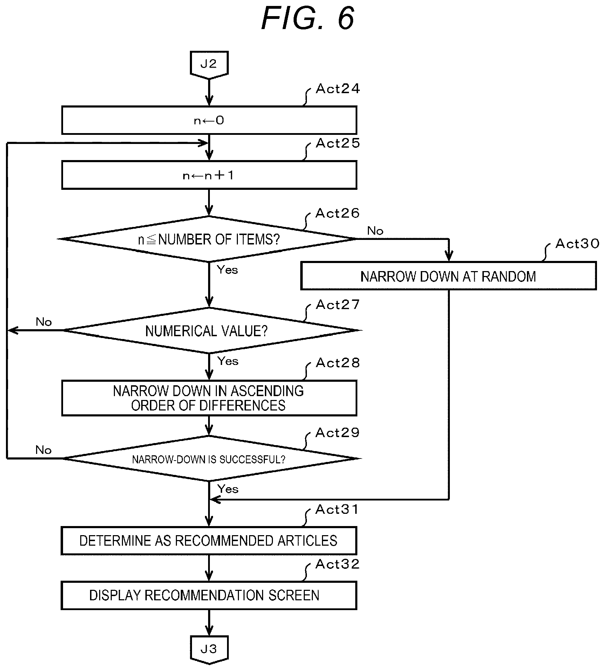

In Act 23, the processor 11 causes the touch panel 14 to display a recommendation screen as in Act 14. The processor 11 returns to Act 1 in FIG. 4.
While processing a loop of Act 15 to Act 22, if the item number n becomes larger than the number of items included in the attribute database before the total number Nt reaches the maximum number Nm, the processor 11 determines No in Act 16 and proceeds to Act 24 in FIG. 6. That is, if the maximum number Nm of recommended articles are not successfully determined even if the processor 11 attempts to narrow down the coinciding articles targeting all the items included in the attribute database, the processor 11 proceeds to Act 24 in FIG. 6.
In Act 24, the processor 11 clears a value of the item number n to 0.

In Act 25, the processor 11 increases the item number n by one.

In Act 26, the processor 11 confirms whether the item number n is equal to or smaller than the number of items of the attribute data in the attribute database. If the item number n is equal to or smaller than the number of items, the processor 11 determines Yes and proceeds to Act 27. That is, if attribute data of the item having the item number n is present in the attribute database, the processor 11 proceeds to Act 27.
In Act 27, the processor 11 confirms whether a data type of the attribute data of the item having the item number n is "numerical value". Specifically, the processor 11 acquires, from the management database, the data record R2 in which the field F21 coincides with the item number n. The processor 11 confirms whether data set in the field F23 of the acquired data record R2 represents "numerical value". In the specific example, data types of the provision time period, the weather, and the season, which are the attributes of the items having the item numbers 1, 3, and 4, are not "numerical value". Therefore, if an item number is 1, 3, or 4, the processor 11 determines No and returns to Act 25. On the other hand, data types of the age group and the amount, which are the attributes of the items having the item numbers 2 and 5 are "numerical value". Therefore, if an item number is 2 or 5, the processor 11 determines Yes and proceeds to Act 28.
In Act 28, the processor 11 extracts, out of the coinciding articles narrowed down so far, Nm-Nt coinciding articles in ascending order of the absolute values of differences of the numerical value indicated by the attribute data of the item having the item number n from numerical values indicated by attribute data concerning designated article about the same item.
It is assumed that, if the processor 11 fails in narrowing down the coinciding articles to one of the article G and the article H in Act 17 in the specific example explained above, as the age group, which is the attribute of the item having the item number 2, "thirties", "forties", and "fifties" are respectively set for the article A, the article G, and the article H. In this case, the processor 11 calculates "10" as the absolute value of "30-40" concerning the article G. The processor 11 calculates "20" as the absolute value of "30-50" concerning the article H. As a result, the processor 11 narrows down the coinciding articles to the article G.
In Act 29, the processor 11 confirms whether the narrow-down of the Nm-Nt coinciding articles are successful in Act 28. For example, apart from the specific example explained above, it is assumed that, as the age group, which is the attribute of the item having the item number 2, "thirties", "forties", and "twenties" are respectively set for the article A, the article G, and the article H. The processor 11 calculates "10" as the absolute value of "30-40" concerning the article G. The processor 11 calculates "10" as the absolute value of "30-20" concerning the article H. As a result, the processor 11 fails in narrowing down the coinciding articles to one of the article G and the article H. If the processor 11 fails in the narrow-down in this way, the processor 11 determines No in Act 29 and repeats Act 25 and subsequent acts. By repeating the acts, the processor 11 attempts the narrow-down in Act 28 concerning an item of lower order, a data type of which is "numerical value". If the processor 11 succeeds in the narrow-down, the processor 11 determines Yes in Act 29 and proceeds to Act 31.
If the item number exceeds the number of items of the attribute data in the attribute database while the processor 11 fails in the narrow-down in Act 28, the processor 11 determines No in Act 26 and proceeds to Act 30. That is, if the processor 11 fails in the narrow-down even if the processor 11 executes Act 27 to Act 29 targeting all the items, the processor 11 proceeds to Act 30.
In Act 30, the processor 11 narrows down the coinciding articles narrowed down so far to Nm-Nt coinciding articles at random. However, the processor 11 only has to narrow down the coinciding articles irrespective of attribute data according to predetermined rules. The rules may be any rules. The processor 11 proceeds to Act 31.

In Act 31, the processor 11 determines all the coinciding articles narrowed down this time as recommended articles.

In Act 32, the processor 11 causes the touch panel 14 to display a recommendation screen as in Act 14. The processor 11 returns to Act 1 in FIG. 4. Incidentally, if the store clerk finishes designating, in the handy terminal 1, all articles that the customer is about to order, the store clerk performs, with the touch panel 14 or the key switch group 15, predetermined operation for instructing to end the designation of articles. The processor 11 determines Yes in Act 2 in FIG. 4 according to the operation and proceeds to Act 33.
In Act 33, the processor 11 transmits order data including the order reception list to the order management apparatus 2. By transmitting the order data, the processor 11 requests the order management apparatus 2 to receive an order of the articles included in the order reception list. The processor 11 executes the information processing based on the information processing program in this way, whereby the computer including the processor 11 as the central part functions as a requesting section that performs the request explained above. The processor 11 ends the information processing illustrated in FIGS. 4, 5, and 6.
The processor 11 executes the information processing based on the information processing program in this way, whereby the computer including the processor 11 as the central part functions as a selecting section that selects recommended articles. The computer including the processor 11 as the central part notifies the recommended articles to the operator by causing the touch panel 14 to display the recommendation screen in Act 14, Act 23, or Act 32. The computer functions as a notifying section that performs such notification.
As explained above, with the handy terminal 1, if an order of the designated commodity cannot be received, an alternative article can be recommended by displaying the recommendation screen. The recommended article is determined according to a coincidence situation of the attribute data respectively set concerning the plurality of items for each article. Therefore, in a menu change in which only a part of articles is changed, it is unnecessary to perform correction of some data concerning articles that are not changed. It is possible to reduce labor and time for maintenance involved in the menu change.
With the handy terminal 1, the attribute data representing the attributes of the articles is used as the setting data referred to in determining recommended articles. Therefore, similarity of the attributes is reflected on the determination of the recommended articles. Consequently, it is possible to determine, as the recommended articles, articles more suitable to be recommended as alternatives.
With the handy terminal 1, if a large number of other articles, attribute data of which concerning items having higher priority degrees coincides with the designated article, are present, the recommended articles are narrowed down according to a coincidence situation of attribute data concerning items having lower priority degrees than the items. Therefore, the number of recommended articles does not excessively increase. With the handy terminal 1, the number of recommended articles displayed on the recommendation screen is limited to the maximum number Nm. Therefore, it is possible to facilitate selection of articles from the recommendation screen and effectively perform recommendation. That is, if the number of recommended articles displayed on the recommendation screen is too large, it is troublesome to select articles to be ordered out of the large number of recommended articles. Therefore, it could occur that the customer hates such a trouble and does not refer to the recommendation screen. On the other hand, with the handy terminal 1, it is possible to avoid such a trouble and improve possibility of utilization of the recommendation screen.
Various modified implementations of this embodiment are possible as explained below.

One or both of the attribute database and the management database may be stored in, for example, a storage device included in the order management apparatus 2 or a storage device provided on the outside of the handy terminal 1 such as a network drive connected to the communication network 6.
The setting data may include data not representing attributes of articles instead of or in addition to the attribute data. For example, an identification code of a group optionally determined by the administrator may be used as the setting data.
The operator does not need to be the store clerk and may be, for example, the customer. That is, the handy terminal 1 may be an order terminal apparatus called table terminal that is disposed on a customer table and receives an order by operation by the customer. Alternatively, the handy terminal 1 may be an order terminal apparatus of a type that is set, for example, near an entrance of the store and is mainly operated by the customer when the customer enters the store. The order terminal apparatus of this type is sometimes an apparatus of a vending machine type including a settlement function as well. Further, the handy terminal 1 can also be realized as an information processing apparatus for information provision not including a function of receiving an order.
The notification of the recommended article to the operator may be performed by any method different from the screen display such as an output of a voice message.
The processor 11 may transmit, every time the processor 11 determines Yes in Act 4, order data for requesting order reception of only a designated article at that time. In this case, the processor 11 does not perform Act 5 and Act 33.
A part or all of the functions realized by the processor 11 according to the information processing can also be realized by hardware that executes information processing not based on a computer program such as a logic circuit. Each of the functions explained above can also be realized by combining software control with the hardware such as the logic circuit.
The several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. An information processing apparatus configured to access a storing section that stores, concerning each of a plurality of articles, setting data respectively set in advance concerning a plurality of items, the information processing apparatus comprising:
a determining section configured to determine a designated article designated as a candidate of an order by operation of an operator;
a selecting section configured to select, if an order of the designated article determined by the determining section cannot be fulfilled, recommended articles, setting data of which stored in the storing section and associated with the designated article is stored in the storing section, in descending order of priority degrees of items for which the associated setting data are set; and
a notifying section configured to notify the recommended articles selected by the selecting section to the operator.

2. The information processing apparatus according to claim 1, wherein, if a plurality of the recommended articles, are present, the selecting section selects the recommended articles in descending order of priority degrees of the items, the setting data of which items having lower priority degrees than the items associated with the designated article.

3. The information processing apparatus according to claim 1 or 2, wherein, if a number of the recommended articles, is larger than a predetermined maximum number, the selecting section selects the predetermined maximum number of the recommended articles based on priority degrees.

4. The information processing apparatus according to any one of claims 1 to 3, wherein the setting data comprises a stock number of designated articles, and the order of the designated article determined by the determining section cannot be fulfilled when the stock number is zero.

5. The information processing apparatus according to any one of claims 1 to 4, wherein the priority degrees of items comprises historical data of previous orders by the operator.

6. The information processing apparatus according to any one of claims 1 to 5, wherein the priority degrees of items comprises a stock number of designated articles.

7. The information processing apparatus according to any one of claims 1 to 6, further comprises a requesting section configured to request an order management apparatus, which manages an order, to receive an order of the designated article determined by the determining section, the designated article being an article, an order of which can be fulfilled.

8. An information processing method for an information processing apparatus configured to access a storing section that stores, concerning each of a plurality of articles, setting data respectively set in advance concerning a plurality of items, the information processing method comprising:
determining a designated article designated as a candidate of an order by operation of an operator;
selecting, if an order of the determined designated article cannot be fulfilled, recommended articles, setting data of which stored in the storing section associated with the designated article is stored in the storing section , in descending order of priority degrees of items for which the associated setting data are set; and
notifying the selected recommended articles to the operator.

9. The information processing method according to claim 8, further comprising:
requesting an order management apparatus, which manages an order, to receive an order of the designated article determined, the designated article being an article, an order of which can be fulfilled.

10. The information processing method according to claim 8 or 9, wherein, if a plurality of the recommended articles, are present, selecting the recommended articles in descending order of priority degrees of the items, the setting data of which items having lower priority degrees than the items associated with the designated article.

11. The information processing method according to any one of claims 8 to 10, wherein, if a number of the recommended articles, is larger than a predetermined maximum number, selecting the predetermined maximum number of the recommended articles based on priority degrees.

12. The information processing method according to any one of claims 8 to 11, wherein the setting data comprises a stock number of designated articles, and the order of the designated article determined cannot be fulfilled when the stock number is zero.

13. The information processing method according to any one of claims 8 to 12, wherein the priority degrees of items comprises historical data of previous orders by the operator.

14. The information processing method according to any one of claims 8 to 13, wherein the priority degrees of items comprises a stock number of designated articles.

15. The information processing method according to any one of claims 8 to 14, further comprising requesting an order management apparatus, which manages an order, to receive an order of the designated article determined by the determining section, the designated article being an article, an order of which can be fulfilled.
